# EUROPÄISCHE PATENTANMELDUNG

(11) **EP 3 059 215 A1**
(43) Veröffentlichungstag der Anmeldung: **24.08.2016**
(21) Anmeldenummer: 16158322.4
(22) Anmeldetag: 17.09.2007
(51) Int. Cl.: C04B 28/04, C04B 111/00

(54) **THERMISCH LEITFÄHIGES SAND-ZEMENT GEMISCH**

(30) Priorität: 22.09.2006 LU 91278
(62) Teilanmeldung aus: 10178571.5
(71) Anmelder: Intellectual Property Management Luxembourg SARL, 5421 Erpeldange (LU)
(72) Erfinder: SCHMIDT, Fernand, 5421 Erpeldange (LU)
(74) Vertreter: Office Freylinger

(57) **Zusammenfassung**

Die Erfindung betrifft ein durch die Bodenfeuchtigkeit ausgehärtetes, eine feste Schicht bildendes Sand/Zement Gemisch dessen Wärmewiderstand höchstens 0,50 Km/W beträgt, das mindestens 40 kg/m³ Bindemittel und wenigstens 75 Gew. % einer Gesamtheit eines Zuschlags eines Natursandes mit runder Körnung enthält, der eine Körnung von K 0/2 f5 nach EN 13139 und EN 13242 aufweist, sowie dessen Verwendung als Bettungsmaterial für die unterirdische Verlegung von Hochspannungsleitungen.

## Beschreibung

Die vorliegende Erfindung betrifft einen thermischleitfähigen Magerbeton, der speziell für die unterirdische Verlegung von Hochspannungsleitungen geeignet ist.

Als Alternative zu Hochspannungsfreileitungen wurde die unterirdische Verlegung von Hochspannungsleitungen entwickelt und auch erfolgreich durchgeführt. Für Spannungen bis 400 kV werden unter anderem sogenannte VPE-Kabel (Kabel mit einer Isolierung aus vernetztem Polyethylen (VPE)) verwendet.

Ein wesentlicher Faktor beim Betrieb von Hochspannungsleitungen stellen die Verluste bei der Übertragung von Strom dar. Diese Verluste sind abhängig von der Betriebstemperatur, die wiederum abhängig ist von der Belastung, der Legetiefe, der Anordnung der Kabel, vom Abstand zwischen den Kabeln, der Anzahl der parallel geführten Systeme, vom Wärmewiderstand der Isolierung und des Erdreiches sowie von der Temperatur an der Erdoberfläche.

Der Wärmewiderstand des Erdreichs spielt demnach eine wichtige Rolle bei der Optimierung des Betriebs von unterirdisch verlegten Hochspannungskabeln. Der Wärmewiderstand des Erdreichs ist stark abhängig von der Feuchtigkeit des Bodens. Der spezifische Wärmewiderstand von feuchtem Boden liegt bei 1,0 Km/W während der spezifische Wärmewiderstand von trockenem Boden bei 2,5 Km/W liegt. Feuchter Boden leitet die Wärme also besser als trockner Boden. Da bei unterirdisch verlegten Hochspannungskabeln, mit Rücksicht auf die Lebensdauer der VPE-Isolierung, von einer dauernden, zulässigen Höchsttemperatur von 90°C ausgegangen wird, bleibt es nicht aus, dass das Erdreich in der Umgebung des Hochspannungskabels austrocknet und somit der spezifische Wärmewiderstand sich erhöht. Um dem entgegenzuwirken, füllt man den Trockenbereich mit speziellem Bettungsmaterial - einem Sand-Zement-Gemisch (Magerbeton), das im trockenen Zustand einen spezifischen Wärmewiderstand von weniger als 1,2 Km/W aufweist, aus. Durch diese Maßnahme allein erzielt man eine um 10% höhere Strombelastbarkeit bei einem Belastungsgrad von m = 0,7.

### Aufgabe der Erfindung

Aufgabe der vorliegenden Erfindung ist es folglich, einen thermischleitfähigen Magerbeton vorzuschlagen, der einen Wärmewiderstand von weniger als 0,5 Km/W aufweist.

### Allgemeine Beschreibung der Erfindung

Diese Aufgabe wird erfindungsgemäß gelöst durch einen Magerbeton gemäss Anspruch 1.

Überraschenderweise hat sich ergeben, dass durch den Zusatz von wenigstens 75 Gew. % eines Natursandes mit runder Körnung, der eine Körnung von ≤ 0/2 f₅ nach EN 13139 und EN 13242 aufweist sich der Wärmewiderstand des Magerbetons drastisch verringert und weniger als 0,50 Km/W aufweist.

Der Fachmann war bisher davon ausgegangen, dass die Kornform feiner Gesteinskörnungen unter 4mm für die Eigenschaften von Mörtel u.a. nicht von Bedeutung sei und deshalb vernachlässigt werden kann (siehe z. B. DIN 13139 Abschnitt 5.4.1.). Im Zusammenhang mit dem Wärmewiderstand hat es sich überraschenderweise herausgestellt, dass die Kornform eine sehr wichtige Bedeutung hat und dass je runder die Kornform ist, desto geringer der Wärmewiderstand des Magerbetons ist.

Des Weiteren hat sich gezeigt, dass das Risiko einer Beschädigung des Hochspannungskabels während des Einbringens des erfindungsgemäßen Magerbetons gegenüber eines Betons verringert wird.

Durch den geringen Wärmewiderstand des Bettungsmaterials kann die Belastung der VPE-Kabel erhöht werden, ohne dass dadurch die Kabeltemperatur erhöht wird. Bei gleicher Belastung ist die Temperatur des VPE-Kabels entsprechend geringer, wodurch sich die Lebensdauer der Kabel entsprechend erhöht. Alternativ kann bei neuen Systemen die Legetiefe und/oder der Mindestabstand zwischen den VPE-Kabeln verringert werden, wodurch sich die Baukosten entsprechend vermindern.

Der erfindungsgemäße Magerbeton lässt sich leicht vorort herstellen und schnell und kostengünstig einbauen. Die Einbringung ist unproblematisch und die Hohlraumfüllung ist sehr gut. Des Weiteren bedarf es keiner hohen Verdichtung, da der Magerbeton im Kontakt mit dem Erdreich aushärtet.

Ein weiterer Vorteil des erfindungsgemäßen Magerbetons besteht in seiner hellen Farbe, die als Warn- und Sicherheitshinweis bei späteren Baggerarbeiten im Erdreich leicht zu Erkennen ist.

Unter Magerbeton versteht man im Zusammenhang mit der Erfindung ein Sand-Zement Gemisch, das mindestens 40 kg/m³ Bindemittel aufweist und normalerweise 120 kg/m³ nicht überschreitet. Unter Natursand mit runder Körnung versteht man im Zusammenhang mit der Erfindung Natursand dessen Körner im wesentlichen abgerundet bzw. rund sind d.h. im wesentlichen ohne scharfe Kanten. Der Natursand mit runder Körnung steht im Gegensatz zu Bruchsand dessen Körner eckig bis kantig oder aber splitterige Kornformen aufweisen. Die Kornform des Bruchsandes ist also im wesentlichen unregelmäßig.

Überraschenderweise hat sich herausgestellt, dass wenn Natursand mit einer Körnung von ≤ 0/1 f5 benutzt wird, sich der Wärmewiderstand weiter reduziert und Werte von weniger als 0,45 Km/W oder gar von weniger als 0,40 Km/W und manchmal sogar ein Wärmewiderstand von +/- 0,36 Km/W erreicht werden kann. Dass man durch die richtige Auswahl des Sandes bei einem Magerbeton den Wärmewiderstand eines Magerbetons derart verbessern kann, war unvorhersehbar.

Der verwendete Natursand mit runder Körnung sollte im wesentlichen keine Anteile im Kieskornbereich oder Bruchmaterial enthalten. Diese Materialien verschlechtern den Wärmewiderstand des Magerbetons.

Akzeptable Wärmewiderstandswerte von weniger als 0,5 Km/W können mit einem erfindungsgemäßen Magerbeton der zusätzlich bis zu 25% Gew. % eines Bruchsandes mit eckiger Körnung, der eine Körnung von ≤ 0/2 f5 aufweist, erreicht werden.

Je nach den Gegebenheiten der Baustelle kann der Anteil an Bindemittel bis zu 120 kg/m³ betragen. Ein solcher Bindemittelanteil ist vor allem beim Einbau in Feuchtgebieten ratsam, da beim Kontakt mit dem Grundwasser ein Teil des Bindemittels während der Abhärtung ausgeschwemmt werden kann.

Als Bindemittel wird vorzugsweise Portlandzement verwendet.

Vorteilhafterweise enthält der Magerbeton wenigstens 80 Gew. %, vorzugsweise wenigstens 85%, besonders bevorzugt wenigstens 90% und insbesonders bevorzugt wenigstens 95% eines Natursandes mit runder Körnung, der eine Körnung von ≤ 0/1 f5 nach EN 13139 und EN 13242 aufweist.

Die besten Wärmewiderstandswerte (+/- 0,36 Km/W) werden erreicht, wenn ein Magerbeton mit im wesentlichen 100 Gew. % Natursand mit einer runden Körnung, der eine Körnung von ≤ 0/1 f5 aufweist und ungefähr 40kg/m³ Portlandzement verwendet wird.

Gemäss einem anderen Aspekt betrifft die Erfindung die Verwendung eines solchen Magerbetons als Bettungsmaterial für die unterirdische Verlegung von Hochspannungsleitungen.

### Beschreibung anhand eines Beispiels

Im folgenden wird eine Ausgestaltung der Erfindung anhand des nachfolgenden Beispiels beschrieben.

### Beispiel

VPE-Kabel für Hochspannung werden idealerweise in einer Ebene in einer Tiefe von 1,50 m verlegt, wobei ein Achsenabstand zwischen den einzelnen Kabeln von 0,5 m nicht unterschritten werden sollte. Die VPE-Kabel werden in eine ungefähr 60 cm dicke Bettungsschicht aus Magerbeton verlegt, der im Laufe der Zeit durch die Bodenfeuchtigkeit aushärtet und eine feste Schicht bildet. Zum Schutz vor mechanischen Beschädigungen kann die Magerbetonschicht mit Kunststoffplatten abgedeckt werden und zusätzlich mit Warnbändern gekennzeichnet werden.

Aus der Literatur sind folgende Wärmewiderstandswerte allgemein bekannt:

| | |
|---|---|
| Gasbeton : | 4,54 Km/W |
| Beton: | 1,2 Km/W |
| Ziegelsteine : | 2,0 Km/W |
| Feuchter Boden : | 1,0 Km/W |
| Trockner Boden : | 2,5 Km/W |

Im Zusammenhang mit der vorliegenden Erfindung wurden Blöcke von 0,8 x 0.6 x 0,6 m aus verschiednen Mischungen hergestellt und ungefähr 8 Wochen aushärten lassen und anschließend getestet.

Der Wärmewiderstand wurde gemessen nach der Methode "Transient needle" die näher beschrieben ist in einem Artikel der Electrical Research Association: " *Methods of Determining thermal resistivity of soil in situ for the calculation of cable ratings"* Technical Report F/T 181-1955.

Die Messnadel besteht aus Stahlrohr mit einer Länge von ungefähr 500 mm und einem Durchmesser von 6,5 mm, in dem ein elektrisch beheizter Draht im angebracht ist. Die Sonde wird in das zu prüfende Material eingebracht, elektrisch verkabelt und an die Messinstrumente angeschlossen. Nach einer kurzen Vorwärmzeit wird die Temperatur in regelmäßigen Abständen abgelesen und daraus dann der Wärmewiderstand errechnet.

Folgende Magerbetons wurden getestet:
Beispiel 1:
   75 % Natursand 0/2 f5, 25 % Bruchsand 0/4 f5 50 kg/m³ Portlandzement
   Gemessener Wärmewiderstand: 0,50 Km/W
Beispiel 2:
   75 % Natursand 0/1 f5, 25 % Bruchsand 0/4 f5 50 kg/m³ Portlandzement
   Gemessener Wärmewiderstand: 0,48 Km/W
Beispiel 3:
   85 % Natursand 0/1 f5, 15 % Bruchsand 0/4 f5 50 kg/m³ Portlandzement
   Gemessener Wärmewiderstand: 0,43 Km/W
Beispiel 4:
   100 % Natursand 0/2 f5, 70 kg/m³ Portlandzement
   Gemessener Wärmewiderstand: 0,38 Km/W
Beispiel 5:
   100 % Natursand 0/1 f5, 40 kg/m³ Portlandzement
   Gemessener Wärmewiderstand: 0,36 Km/W
Beispiel 6: Vergleich
   Hochofenschlacke 0/4, 50 kg/m³ Portlandzement
   Gemessener Wärmewiderstand: 0,55 Km/W

## Patentansprüche

1. Durch die Bodenfeuchtigkeit ausgehärtetes, eine feste Schicht bildendes Sand/Zement Gemisch dessen Wärmewiderstand weniger als 0,50 Km/W beträgt, das mindestens 40 kg/m³ Bindemittel und wenigstens 75 Gew. % einer Gesamtheit eines Zuschlags eines Natursandes mit runder Körnung enthält, der eine Körnung von ≤ 0/2 f5 nach EN 13139 und EN 13242 aufweist.

2. Sand/Zement Gemisch nach Anspruch 1, **dadurch gekennzeichnet, dass** der Natursand eine Körnung von ≤ 0/1 f5 aufweist.

3. Sand/Zement Gemisch nach Anspruch 1 oder 2, **dadurch gekennzeichnet, dass** der Natursand mit runder Körnung im wesentlichen keine Anteile im Kieskornbereich oder Bruchmaterial enthält.

4. Sand/Zement Gemisch nach einem der vorhergehenden Ansprüche, **dadurch gekennzeichnet, dass** der Magerbeton wenigstens 80 Gew. % vorzugsweise wenigstens 85%, besonders bevorzugt wenigstens 90% und insbesondere bevorzugt wenigstens 95% eines Natursandes mit runder Körnung enthält, der eine Körnung von ≤ 0/1 f5 aufweist, enthält.

5. Sand/Zement Gemisch nach einem der vorhergehenden Ansprüche, **dadurch gekennzeichnet, dass** der Magerbeton zusätzlich bis zu 25% Gew. % eines Bruchsandes mit eckiger Körnung, der eine Körnung von ≤ 0/2 f5 aufweist

6. Sand/Zement Gemisch nach einem der vorhergehenden Ansprüche, **dadurch gekennzeichnet, dass** weniger als 120 kg/m³ Bindemittel aufweist.

7. Sand/Zement Gemisch nach einem der vorhergehenden Ansprüche, **dadurch gekennzeichnet, dass** das Bindemittel Portlandzement ist.

8. Sand/Zement Gemisch nach einem der vorhergehenden Ansprüche, **dadurch gekennzeichnet, dass** der Wärmewiderstand weniger als 0,45 Km/W oder besonders bevorzugt als 0,40 Km/W und insbesonders bevorzug ≤ 0,36 Km/W beträgt.

9. Verwendung eines, durch die Bodenfeuchtigkeit ausgehärteten und eine feste Schicht bildendes Sand/Zement Gemischs gemäss einem der vorhergehenden Ansprüche als Bettungsmaterial für die unterirdische Verlegung von Hochspannungsleitungen.
